Europäisches Patentamt

European Patent Office

Office européen des brevets

(11) Veröffentlichungsnummer: **0 221 011**
A2

(12) # EUROPÄISCHE PATENTANMELDUNG

(21) Anmeldenummer: 86810418.3

(22) Anmeldetag: 22.09.86

(51) Int. Cl.⁴: **G 01 N 21/55**
G 01 J 3/46, G 01 N 25/14

(30) Priorität: 26.09.85 CH 4185/85

(43) Veröffentlichungstag der Anmeldung:
06.05.87 Patentblatt 87/19

(84) Benannte Vertragsstaaten:
BE CH DE FR GB IT LI NL

(71) Anmelder: CIBA-GEIGY AG
Klybeckstrasse 141
CH-4002 Basel (CH)

(72) Erfinder: Schär, Rudolf Walter, Dr.
Im Egg 49
CH-4147 Aesch (CH)

Hofmann-Sievert, Rita, Dr.
Route de Bel-Air 38
CH-1723 Marly (CH)

Die Bezeichnung der Erfindung wurde geändert (Richtlinien für die Prüfung im EPA, A-III, 7.3).

(54) **Analysenverfahren, unter Verwendung der abgeschwächten Totalreflexion.**

(57) Beschrieben wird ein Verfahren zur Analyse von gegebenenfalls feststoffhaltigen Lösungen von Farbstoffen oder deren Vor- und Zwischenprodukten durch optische und/oder spektroskopische Messungen, das dadurch gekennzeichnet ist, dass als Sensorsystem eine Vorrichtung verwendet wird, die auf dem Prinzip der abgeschwächten Totalreflexion beruht.

Vorteil dieses Verfahrens ist, dass selbst hochkonzentrierte stark farbige Lösungen ohne vorheriges Verdünnen oder auch Farbstoffdispersionen ohne Abtrennen des Feststoffanteils analysiert werden können.

EP 0 221 011 A2

**Beschreibung**

Analysenverfahren

Die Erfindung betrifft ein Verfahren zur Analyse flüssiger gegebenenfalls einen Feststoff enthaltender Lösungen von Farbstoffen oder deren Vor- und Zwischenprodukten durch eine optische und/oder spektroskopische Messung, wobei als Sensorsystem eine Vorrichtung verwendet wird, die auf dem Prinzip der (gedämpften) abgeschwächten Totalreflexion beruht.

In den letzten Jahren ist man zunehmend bestrebt, die Farbstoffherstellung zu automatisieren und zwar sowohl was den Herstellungsprozess anbetrifft, als auch hinsichtlich der Aufarbeitung. Um hier zu befriedigenden und reproduzierbaren Ergebnissen zu gelangen, ist man auf Analysenmethoden angewiesen, die sich durch folgende Kriterien auszeichnen: kurze Analysendauer, hohe Analysenfrequenz, möglichst geringe Kosten, Einfachheit, Zuverlässigkeit und geringer Platzbedarf. Geräte, die diese Anforderungen erfüllen, sind vor allem Sensoren für Druck, Temperatur und pH. Wichtig ist jedoch daneben, gerade im Farbstoffbereich, eine Erfassung optischer Daten, möglichst in einem grösseren Wellenlängenbereich. Mit dem Aufkommen der Faserlichtleiter haben die spektroskopischen Methoden an Bedeutung gewonnen, da nun Messeinrichtung und Messzelle voneinander getrennt installiert werden können. Der Vorteil der spektroskopischen Methoden besteht in ihrer hohen Selektivität, wodurch auch die rasche Analyse komplexer Stoffgemische ohne aufwendige Trennung möglich ist. Ferner erfüllt gerade diese Analysenmethode die eingangs genannten Anforderungen in idealer Weise.

Wichtig für optische Messungen im sichtbaren oder auch infraroten bzw. ultravioletten Bereich sind geeignete Vorrichtungen zur Durchleitung des für die Untersuchung verwendeten Lichtstrahls durch das flüssige Medium. Bei der einfachsten Ausführungsform handelt es sich um eine Durchflussküvette, diese erfordert jedoch im allgemeinen einen Bypass, durch den das zu untersuchende Medium ständig umgepumpt wird. Ferner machen sich hier Partikel, an denen das Licht gestreut wird, als äusserst störend bemerkbar. Neben der Durchflussküvette sind inzwischen eine ganze Reihe weiterer Systeme entwickelt worden, die man lediglich in das zu analysierende Medium eintaucht und für die sich allgemein die Bezeichnung optischer Sensor (Optrode ®) eingebürgert hat. Optische Sensoren zur Transmissionsmessung bestehen beispielsweise aus einem Zweiweg-Faserbündel und einem Spiegel, bei der Messung von Streulicht und Reflektivität werden ähnliche Konstruktionen aber ohne Spiegel verwendet. Der schwerwiegendste Nachteil derartiger optischer Sensoren, wie auch der Durchflusszelle ist jedoch, dass konzentrierte Lösungen oder Lösungen mit einem hohen Feststoffanteil nicht oder nicht mehr einwandfrei und reproduzierbar analysiert werden können. Gerade stark absorbierende und feststoffhaltige Lösungen sind jedoch in der Farbstoffchemie der Normalfall. Einer Analyse geht daher hier immer noch eine aufwendige Probenvorbereitung durch mehrmaliges Verdünnen und/oder Abtrennen von ungelösten Anteilen voraus. Die Probenvorbereitung ist zeitaufwendig und birgt Fehlerquellen in sich. Die kontinuierliche Ueberwachung eines Verfahrens ist auf diese Weise praktisch nicht möglich.

Aufgabe der Erfindung ist es daher, ein optisches System, einen optischen Sensor zu finden, der sich auch bei konzentrierten, stark farbigen und gegebenenfalls feststoffhaltigen Flüssigkeiten einsetzen lässt und ein Verfahren zur Analyse derartiger Medien zu entwickeln, das ohne Verdünnen auskommt und kontinuierlich im on-line-Betrieb durchgeführt werden kann.

Gefunden wurde, dass sich Sensoren, die auf dem Prinzip der abgeschwächten Totalreflexion beruhen, hervorragend für diesen Zweck eignen.

Gegenstand der Erfindung ist somit ein Verfahren zur Analyse von gegebenenfalls feststoffhaltigen Lösungen von Farbstoffen oder deren Vor- und Zwischenprodukten durch optische und/oder spektroskopische Messungen, das dadurch gekennzeichnet ist, dass als Sensorsystem eine Vorrichtung verwendet wird, die auf dem Prinzip der abgeschwächten Totalreflexion beruht.

Trifft ein Lichtstrahl auf die Grenzfläche zwischen einem optisch dichten und optisch dünnen Medium, so wird er totalreflektiert, wenn der Einfallswinkel grösser ist als der kritische Winkel. Bei der Totalreflexion legt der Lichtstrahl jedoch einen gewissen Weg im dünneren Medium zurück. Die Eindringtiefe und die wirksame Schichtdicke sind Funktionen der Brechungsindices, des Einfallswinkels, der Wellenlänge und der Polarisation; sie liegen in etwa in der Grössenordnung der Wellenlänge des Lichts. Während des Weges im dünneren Medium tritt das Licht in Wechselwirkung mit diesem. Dabei kann es durch Absorption abgeschwächt werden, daher die Bezeichnung abgeschwächte Totalreflexion (englisch: attenuated total reflection, kurz ATR). Da die wirksame Schichtdicke für das in das zu untersuchende Medium eindringende Licht nur etwa eine Wellenlänge beträgt, wird quasi mit einer ultradünnen Absorptionszelle gemessen. Somit können auch hochkonzentrierte Lösungen einwandfrei analysiert werden, ohne dass eine Verdünnung erforderlich ist. Da es sich bei der austretenden Lichtwelle um eine stehende Welle handelt, die an Partikeln nicht gestreut wird, lassen sich auch inhomogene Phasen messen, wie Farbstoffanschlämmungen oder Farbstoffdispersionen.

Die Methode als solche ist bekannt, verwiesen wird beispielsweise auf den Uebersichtsartikel von P.A. Wilks in International Laboratory July/August 1980, Seiten 47 bis 55; sowie N.J. Harrick, Internal Reflection Spectroscopy, Eigenverlag, Ossining New York, USA, 1967 und 1979; F.M. Mirabella, N.J. Harrick, Internal Reflection Spectroscopy, Review and Supplement, Eigenverlag, Ossining New York, USA, 1985.

Kernstück des Sensors zur Bestimmung der abgeschwächten Totalreflexion bei einer bestimmten oder bei variabler Wellenlänge ist ein Prisma aus einem lichtdurchlässigen Material, dessen Brechungsindex höher ist als der Brechungsindex der zu untersuchenden Farbstofflösung. Als Materialien kommen neben hochbrechenden Gläsern, wie z.B. Schwerflintglas, auch Aluminiumoxid (Saphir), Diamant, Strontiumtitanat, Titanoxid, Zirkonoxid oder auch Quarzglas in Frage. Gute Ergebnisse werden insbesondere mit einem Saphirkristall erhalten, da dieses Material relative beständig und in einem weiten Wellenlängenbereich durchlässig und zudem preiswert ist. Es werden Prismen unterschiedlicher Geometrie verwendet, je nachdem ob eine einfache oder mehrfache Reflexion des Messstrahls erreicht werden soll. Ganz allgemein steigt die Empfindlichkeit der Methode mit der Anzahl der Reflexionen und auch mit der Eindringtiefe des Messstrahls in die zu analysierende Lösung, welche direkt vom Brechungsindex abhängt. Im vorliegenden Fall hat sich ein Saphirprisma, insbesondere ein kegelstumpfförmiges Saphirprisma, als gut geeignet erwiesen. Der Lichtstrahl wird darin ein-, zwei- oder dreifach reflektiert.

Bevorzugte Ausführungsformen des erfindungsgemässen Verfahrens sind dadurch gekennzeichnet, dass optische Sensoren verwendet werden können, in denen Einfach- oder Mehrfach-Reflexionen insbesondere bis zur Zehnfach-Reflexion des zur Messung verwendeten Lichtstrahls erfolgen. Dadurch wird ein weiter Bereich der möglichen Anwendungen, speziell im UV/VIS-Spektralbereich abgedeckt. So haben sich Sensoren mit Einfachreflexion als bevorzugte Ausführungsform für Messungen von stark absorbierenden, konzentrierten Lösungen erwiesen. Für Messungen in wenig konzentrierter Lösung und/oder für Messungen im Infrarotbereich sind optische Sensoren mit Vielfach-Reflexion (z.B. zehn bis dreissig Reflexionen) besser geeignet.

Eine besonders bevorzugte Ausführungsform des erfindungsgemässen Verfahrens ist dadurch gekennzeichnet, dass man einen optischen Sensor verwendet, in dem Einfach-, Zweifach- oder Dreifach-Reflexion des zur Messung verwendeten Lichtstrahls erfolgt.

Für die Lichtführung bezüglich des Messstrahls gibt es eine Reihe von Möglichkeiten, wobei die Anordnung des eigentlichen Messgeräts, z.B. des IR-oder UV/VIS-Spektrophotometers hier von Bedeutung ist.

Als besonders vorteilhaft hat sich eine Aufstellung des Spektrophotometers getrennt von der Sonde erwiesen. Diese Methode ist platzsparend, der Sensor kann ferner auch an nur schwer zugänglichen Stellen angebracht werden und zudem können mehrere Sensoren an ein Messgerät angeschlossen werden, bzw. ein Messgerät reicht aus, um die Information von mehreren Sensoren zu verarbeiten.

Um den Sensorkopf nicht nur in klassischen Rührkesseln sondern beispielsweise auch in Rohrreaktoren anzubringen, wie sie heute vielfach für die kontinuierliche Synthese von Azofarbstoffen eingesetzt werden, war es nötig, diesen möglichst klein zu dimensionieren. Hier erweist es sich als vorteilhaft, die Basis des Prismas insbesondere des Saphirkristalls mit zwei annähernd parallel geführten Lichtleitern zu verbinden. Man erhält so eine stabförmige Sonde, die sich auch in Rohrreaktoren mit geringem Durchmesser problemlos unterbringen lässt. Ueber einen der Lichtleiter wird der Messstrahl zugeführt und über den anderen der totalreflektierte Strahl abgeleitet.

Als vorteilhaft erweist es sich ferner, den Sensor und das entsprechende Messgerät über Lichtleiter miteinander zu verbinden, wodurch eine Signalübertragung über weite Strecken z.B. bis zu 1000 m möglich ist, die nicht durch elektrische oder magnetische Felder gestört wird. Ein weiterer Vorteil der Lichtleiter besteht darin, dass keine besonderen Massnahmen zum Explosionsschutz getroffen werden müssen. Grundsätzlich besteht natürlich auch die Möglichkeit im vorliegenden Verfahren Sensoren zu verwenden, die im Sensorkopf integriert bereits Lichtquelle und/oder Detektor enthalten.

Gemäss einer bevorzugten Ausführungsform des erfindungsgemässen Verfahrens werden Daten vom infraroten bis in den ultravioletten Bereich ermittelt. Ganz besonders bevorzugt werden Daten des UV- und UV/VIS-Bereichs ermittelt.

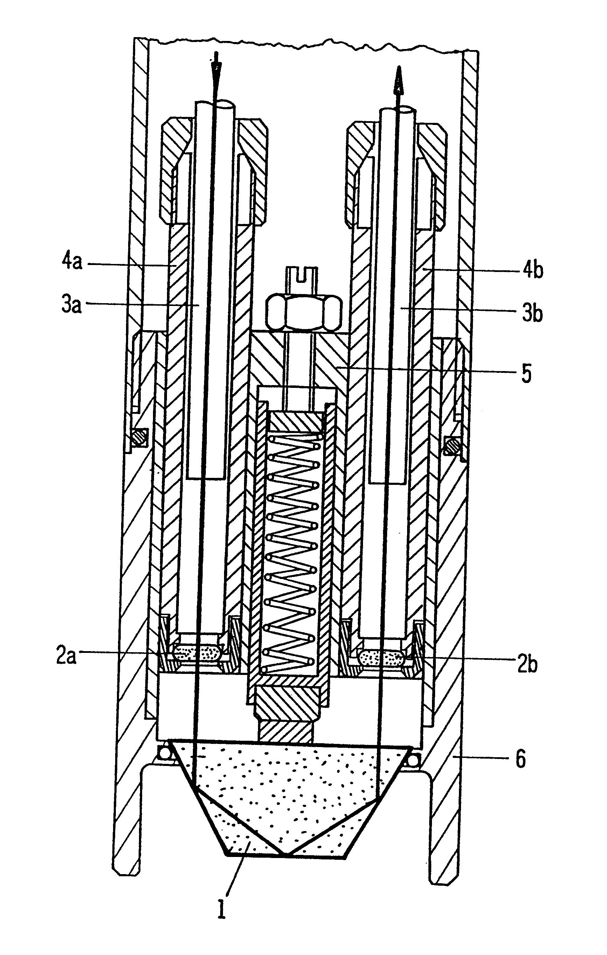

Die Abbildung zeigt einen Sensor, wie er zur Durchführung des hier beschriebenen Verfahrens verwendet wird: im unteren Teil befindet sich der kegelstumpfförmige Saphirkristall 1, der mittels einer darüber angeordneten Feder im Gehäuse gehalten wird, rechts und links von der Feder befinden sich parallel angeordnet die beiden Lichtleiter 3a und 3b in den Haltern 4a und 4b, die Lichtleiter enden vor optischen Linsensystemen 2a und 2b, die den Lichtstrahl zwischen Lichtleiter und Prisma bündeln. 5 zeigt das Gehäuseinnenteil mit der Halterung für die Feder und 6 den äusseren Mantel des Sensors. Der Sensor weist eine genügend hohe Dichtigkeit auf, auch in agressiven Medien und wird zweckmässigerweise so angebracht, dass er direkt in die zu analysierende Lösung eintaucht.

Je nach Durchlässigkeit des Prismas kann mit dieser Methode ein weiter Wellenlängenbereich abgedeckt und in diesem Bereich, je nach Problemstellung, bei einer festen Wellenlänge oder bei variabler Wellenlänge gemessen werden. Für die Analyse von Farbstofflösungen ist in erster Linie der Wellenlängenbereich von Infrarot bis in das Ultraviolett hinein von Bedeutung. Je nach Absorptionsmaximum des Farbstoffs wird man eine oder mehrere bestimmte Wellenlängen oder einen engen Wellenlängenbereich auswählen.

Bei den Farbstoffen, deren Synthese und Verarbeitung mittels der hier beschriebenen Methode überwacht und gesteuert wird, handelt es sich in erster Linie um Textilfarbstoffe, die den verschiedensten chemischen Klassen angehören. Es handelt sich beispielsweise um anionische Farbstoffe, wie Nitro-, Aminoketon-, Ketonimin-, Methin-, Nitrodiphenyl-amin-, Chinolin-, Aminonaphthochinon- oder Cumarinfarbstoffe oder auch saure Farbstoffe auf Basis von Gelbholzextrakt, insbesondere saure Anthrachinon- und Azofarbstoffe, wie Monoazo- und Disazofarbstoffe. Ferner kommen basische, d.h. kationische Farbstoffe in Frage. Es handelt sich hier beispielsweise um die Halogenide, Sulfate, Methosulfate oder Metallhalogenid-Salze, z.B. Tetrachlorzinkate von Azofarbstoffen, wie Monoazo-, Disazo- und Polyazofarbstoffen, von Anthrachinonfarbstoffen, Phthalocyaninfarbstoffe, Diphenylmethan- und

Triarylmethanfarbstoffen, Methin-, Polymethin- und Azomethinfarbstoffens von Thiazol-, Ketonimin-, Acridin-, Cyanin-, Nitro-, Chinolin-, Benzimidazol-, Xanthen-, Azin-, Oxazin- und Thiazinfarbstoffen.

Unter dem Begriff Farbstoffe sollen im vorliegenden Fall auch optische Aufheller verstanden werden, z.B. Stilbenaufheller, vor allem solche vom Typ der Bistriazinylaminostilben-disulfonsäuren, der Bis-styrylbiphenyle und -benzole und der Bis-triazolylstilben-disulfonsäuren.

Es versteht sich von selbst, dass je nach Aufgabenstellung im Zuge der Farbstoffsynthese neben den eigentlichen Farbstoffen bzw. Aufhellern, nach dem erfindungsgemässen Verfahren auch Vor- und Nebenprodukte erfasst werden. Gerade die während der Reaktion gebildeten Nebenprodukte sind von grosser Bedeutung, nicht nur hinsichtlich der Ausbeute, sondern auch was den Farbton bzw. die Eigenfarbe des entsprechenden Farbstoffs/Aufhellers anbetrifft.

Bei geeigneter Wahl von Materialien für das Prisma und den Lichtleiter ist das erfindungsgemässe Verfahren beispielsweise hervorragend zur Bestimmung der Diazoniumionenkonzentration geeignet, was leicht über die Bestimmung der Intensität der $N \equiv N$-Valenzschwingungen im Infrarot, in einem Wellenlängenbereich von 4 bis 5 nm möglich ist. In diesem Fall ist also der Sensor mit einem IR-Spektrophotometer als Messgerät ver bunden. Durch Einstrahlen von Licht einer Wellenlänge bei der die $N \equiv N$-Valenzschwingung angeregt wird, lässt sich auf diese Weise die Aenderung der Diazoniumionenkonzentration als Funktion der Zeit, hier die Reaktionsdauer, verfolgen.

Grundsätzlich ist das Verfahren von grosser Anwendungsbreite und lässt sich in der Farbstoffherstellung zur Steuerung und Regelung der Farbstoffsynthese, zur Steuerung und Regelung von Edukt- und Produktflüssen, zur Analyse und zur Qualitätskontrolle einsetzen. Insbesondere eignet sich das Verfahren:
- zur Konzentrationsbestimmung von Farbstofflösungen und zwar sowohl von echten Lösungen, als auch von Lösungen, die Feststoffe, beispielsweise feindispergierten Farbstoff enthalten;
- zur Verfolgung der Kristallisation bzw. des Aussalzens von Farbstoffen; es lässt sich so die Menge an Salz beim Aussalzen leicht steuern und ein Ueberschuss an Salz, der zu einer hohen Abwasserbelastung führt, kann vermieden werden;
- zur Analyse des Produkt/Eduktverhältnisses und zur Erfassung von Nebenprodukten bei der Farbstoffsynthese, es kann so leicht der Zeitpunkt bestimmt werden, zu dem ein Maximum an Produkt bei einem Minimum an Nebenprodukten im Reaktionsgemisch vorliegt;
- zur Ueberwachung des Stofftransports bei kontinuierlich durchgeführten Syntheseverfahren.

Die folgenden Beispiele dienen zur Erläuterung der Erfindung.

Beispiel 1: Synthese von Dinitrostilbendisulfonsäure (DNS)

Dinitrostilbendisulfonsäure wird hergestellt aus p-Nitrotoluolsulfonsäure (pNTS) durch Oxidation mit Natriumhypochlorit (NaOCl). Dabei treten farblose und farbige Zwischen- und Nebenprodukte auf. Ihre Menge ist bestimmt durch die Reaktionsbedingungen und die Reaktionszeit, weil das Produkt unter den Reaktionsbedingungen nicht stabil ist. Es gilt deshalb, den optimalen Zeitpunkt zu finden, bei dem möglichst viel Edukt und Zwischenprodukt verbraucht ist, aber noch möglichst wenig Produkt zerstört wurde.

Das Edukt und die farblosen Zwischen- und Nebenkomponenten, die nur wenig qualitätsrelevant sind, haben im UV/VIS ähnliche Spektren mit einem Absorptionsmaximum bei ca. 280 nm. Das DNS ist davon deutlich verschieden mit dem Maximum bei 360 nm, noch weiter im Sichtbaren absorbieren die farbigen Nebenkomponenten mit einem breiten Maximum um 460 nm. Oberhalb 700 nm tritt normalerweise keine Absorption auf, so dass 750 nm als Referenzwellenlänge dienen kann. Durchgeführt wird die Analyse mit dem in der Abbildung gezeigten Sensor nach der Methode der abgeschwächten Totalreflexion.

Durch Messen der spektralen Daten während der Reaktion und deren Auswertung werden folgende Informationen gewonnen und können zur Prozesssteuerung verwendet werden:
- optimaler Zeitpunkt für die Beendigung der Reaktion (zeitliche Ableitung der DNS-Absorption wird null);
- Ausbeutekontrolle (durch Messung des Endabsorptionswertes);
- Kontrolle der Reaktionsbedingungen, indem Abweichungen sich durch eine vermehrte Zunahme der farbigen Nebenkomponenten ausdrücken;
- Qualitätskontrolle durch Bestimmung des Anteils der farbigen Nebenkomponenten;
- Kontrolle der Dosierung der Starterkomponente (NaOH) durch Messen der Anfangskinetik (wodurch eine Verbesserung der Reproduzierbarkeit erreicht wird).

Der optische Sensor, in einem Bypass eingebaut und das Photometer, im Kontrollraum untergebracht, liegen dabei 25 m auseinander.

Weitere Messungen dienen der Verfahrensweiterentwicklung (z.B. Bestimmung der optimalen Reaktionstemperatur), wobei rasch, ohne viel Aufwand an stofftrennender Analytik, verbesserte Reaktionsbedingungen gefunden werden können.

Beispiel 2: Konzentrationseinstellung von Lösungen, am Beispiel von Diaminostilbendisulfonsäure (DAS)

Diaminostilbendisulfonsäure fällt nach einem Produktionsschritt als wässrige Suspension mit einer Konzentration von ca. 18 % an und wird für die nachfolgende Operation auf eine 14 %ige Lösung mit einer Genauigkeit von ± 0.1 % (absolut) eingestellt. Durch Messen bei der Wellenlänge des Absorptionsmaxiumums (350 nm) und Vergleich mit einer linearen Eichkurve wird dies sehr genau erreicht, unter Auslassung von Volumenmessung und Dosiereinrichtungen. Durchgeführt wird die Analyse mit dem in der Abbildung gezeigten Sensor nach der Methode der abgeschwächten Totalreflexion.

Hier liegt ein sehr weites Anwendungsgebiet vor für die Konzentrations-/Stärkeeinstellung im Verlauf von Produktionsprozessen oder für flüssige Handelsformen.

Beispiel 3: Filtratwert und Salzverbrauchskontrolle bei der Kristallisation oder Fällung. Aussalzen von Diaminostilbendisulfonsäure (DAS)

Die Konzentrationsabnahme des gelösten Anteils von DAS ist bei Zugabe von Salz (insbesondere Kochsalz) unmittelbar zu verfolgen. Bis zum Endpunkt treten keine Störungen durch den Feststoffanteil auf. Durch diese Messungen kann die zum Aussalzen benötigte Salzmenge (ca. 20 %) optimiert und der Filtratwert kontrolliert werden (Absorbanz $\leq$ 0.025). Durch Beobachten des Beginns der Fällung (bei ca. 5-10 % Kochsalz, von der Temperatur abhängig) kann die Kristallisationsform gesteuert werden.

Die Methode ist allgemein anwendbar, z.B. beim Aussalzen von wasserlöslichen Farbstoffen und optischen Aufhellern und beim Kristallisieren aus heissen Lösungen.

Beispiel 4: Sulfonierung eines Zinkphthalocyanins

Der Grad der Sulfonierung in 40 % Oleum bei ca. 95 °C wird durch die Reaktionszeit gegeben. Um den Endpunkt zu finden, wird üblicherweise nach genau 2 Stunden eine Probe spektrophotometrisch untersucht. Aus dem Verhältnis der Absorptionsbanden im Sichtbaren (666 und 628 nm) wird der Reaktionsendpunkt extrapoliert. Mit dem optischen Sensor gemessen, können die Banden im Sichtbaren nicht verwendet werden, weil sie in der unverdünnten Probe ungenügend aufgelöst sind. Das Verhältnis zweier Absorptionsbanden im UV (230 und 320 nm) verändert sich im Verlauf der Reaktion ebenfalls stetig zunehmend. Der optimale Endpunkt der Reaktion ist erreicht, wenn dieses Verhältnis gerade 1 wird.

**Patentansprüche**

1. Verfahren zur Analyse von gegebenenfalls feststoffhaltigen Lösungen von Farbstoffen oder deren Vor- und Zwischenprodukten durch optische und/oder spektroskopische Messungen, dadurch gekennzeichnet, dass als Sensorsystem eine Vorrichtung verwendet wird, die auf dem Prinzip der abgeschwächten Totalreflexion beruht.

2. Verfahren gemäss Anspruch 1, dadurch gekennzeichnet, dass man optische Sensoren verwendet, in denen eine oder mehrere, vorzugsweise ein bis zehn Reflexionen des zur Messung verwendeten Lichtstrahls erfolgen.

3. Verfahren gemäss Anspruch 1, dadurch gekennzeichnet, dass als Sensor ein Saphirkristall verwendet wird, in dem eine, zwei oder drei Reflexionen des zur Messung verwendeten Lichtstrahls erfolgen.

4. Verfahren gemäss Anspruch 1, dadurch gekennzeichnet, dass man einen optischen Sensor verwendet, in dem eine Einfach-Reflexion des zur Messung verwendeten Lichtstrahls erfolgt.

5. Verfahren gemäss Anspruch 2, dadurch gekennzeichnet, dass der als Sensor verwendete Kristall an seiner Basis mit zwei parallelen Lichtleitern verbunden ist, zur Einstrahlung des zur Analyse verwendeten Lichtbündels und zur Ableitung des totalreflektierten Lichtstrahls.

6. Verfahren gemäss Anspruch 3, dadurch gekennzeichnet, dass der als Sensor verwendete Saphirkristall an seiner Basis mit zwei parallelen Lichtleitern verbunden ist, zur Einstrahlung des zur Analyse verwendeten Lichtbündels und zur Ableitung des totalreflektierten Lichtstrahls.

7. Verfahren gemäss Anspruch 1, dadurch gekennzeichnet, dass Sensor und Messgerät über Lichtleiter miteinander verbunden sind.

8. Verfahren gemäss den Ansprüchen 1 bis 6, dadurch gekennzeichnet, dass der Sensor direkt in die zu analysierende Lösung eintaucht.

9. Verfahren gemäss Anspruch 1, dadurch gekennzeichnet, dass mit Hilfe des Sensors Daten vom infraroten bis in den ultravioletten Bereich ermittelt werden.

10. Verfahren gemäss Anspruch 9, dadurch gekennzeichnet, dass Daten des UV- und UV/VIS-Bereichs ermittelt worden.

11. Verfahren gemäss Anspruch 1, dadurch gekennzeichnet, dass man einen Sensor gemäss Abbildung verwendet.

12. Anwendung des Verfahrens gemäss Anspruch 1 zur Konzentrationsbestimmung, zur Verfolgung der Kristallisation bzw. des Aussalzens von Farbstoffen, zur Analyse des Produkt/Edukt-Verhältnisses und zur Erfassung von Nebenprodukten bei der Farbstoffsynthese oder zur Ueberwachung des Stofftransports bei kontinuierlich durchgeführten Syntheseverfahren.

0221011